Europäisches Patentamt

European Patent Office

Office européen des brevets

(11) Publication number: **0 041 929**
**B1**

(12) **EUROPEAN PATENT SPECIFICATION**

(45) Date of publication of patent specification: **24.07.85**

(51) Int. Cl.⁴: **B 01 J 49/00, C 02 F 1/42**

(21) Application number: **81830085.7**

(22) Date of filing: **27.05.81**

(54) Apparatus for regenerating the resin content of a water-softener cartridge.

(30) Priority: **11.06.80 IT 2272680**

(43) Date of publication of application:
**16.12.81 Bulletin 81/50**

(45) Publication of the grant of the patent:
**24.07.85 Bulletin 85/30**

(84) Designated Contracting States:
**AT BE CH DE FR GB LI NL SE**

(56) References cited:
**FR-A- 815 760**
**FR-A-2 091 499**
**FR-A-2 158 586**
**FR-E- 35 606**
**GB-A- 338 021**
**NL-A- 294 445**
**US-A-2 033 533**

(73) Proprietor: **Nuova Faema S.p.A.**
**15, via Ventura**
**I-20134 Milan (IT)**

(72) Inventor: **Cighetti, Paolo**
**Via Sempione 21/6**
**Arese (Varese) (IT)**

(74) Representative: **Perani, Aurelio et al**
**c/o JACOBACCI-CASETTA & PERANI S.p.A 7,**
**Via Visconti di Modrone**
**I-20122 Milano (IT)**

Courier Press, Leamington Spa, England.

## Description

The present invention relates to an apparatus for regenerating the resin content of the cartridge of a cartridge-type water softener, particularly for an espresso coffee machine, by means of a saline solution. According to the known methods at present in use, exhausted cartridges or cartridge-type water softeners are regenerated by immersion of the cartridges in a receptacle containing an aqueous saline solution and keeping them there for a certain period of time.

Such methods of regeneration, although generally satisfactory, have several recognised disadvantages. As well as being expensive, they do not result in the complete regeneration of the cartridges. In fact, from tests carried out, it has been found that a cartridge regenerated in this manner is again exhausted after the passage of a much smaller quantity of hard water than that which caused the exhaustion of the new cartridge. In addition, the water leaving the cartridge which has just been regenerated is considerably harder than the water leaving a new cartridge. Thus, cartridges regenerated by the conventional regeneration methods have a shorter working life between two successive regenerations and soften the water to a lesser extent.

As a result of this, the practice of throwing away exhausted cartridges has become widespread.

It is also known, for instance from U.K. Patent specification No. 338,021, to regenerate the resin content of a water softener chamber by forming a saline solution above the level of the resin the front of which is progressing downwardly through the chamber.

The problem of the present invention is that of conceiving an apparatus for regenerating the resin content of the cartridge of a cartridge-type water softener, by continuously feeding a saline water solution through the cartridge to regenerate the resin, the cartridge being formed by a cylindrical casing with perforated transverse end walls. This problem is solved by an apparatus as claimed in the single appended claim.

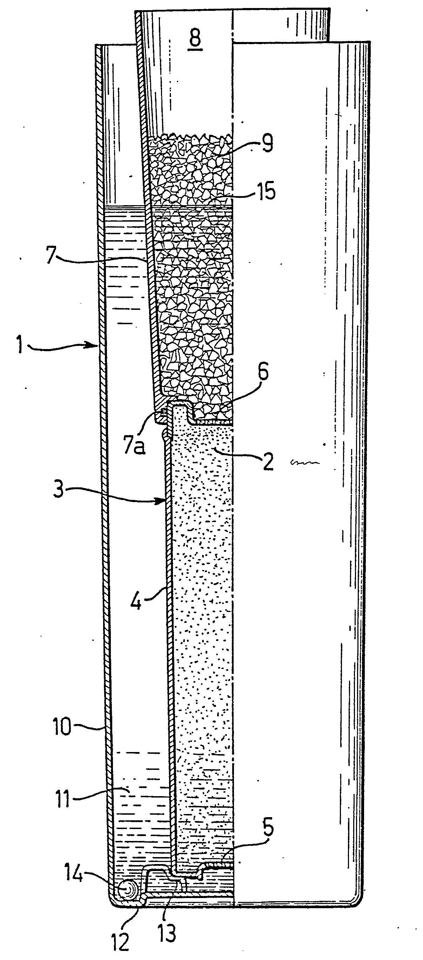

The features and advantages of the invention will become apparent from the following description of one preferred embodiment with reference to the appended drawing which is a partially-sectioned, elevational view of an apparatus according to the invention.

Referring to the appended drawing, by 1 is indicated in its entirety, the apparatus according to the invention for regenerating the resin content 2 of the cartridge 3 of a cartridge-type water softener which is not shown since it is conventional.

The cartridge 3 comprises a cylindrical casing 4 provided at one end with a perforated base wall 5 and at the other end with a perforated head 6. The cartridge 3 encloses within it the resin 2.

The apparatus 1 includes a collar 7 releasably attached to the head end of the cartridge 3 so as to prolong the casing 4. A toroidal washer 7a is interposed between the collar 7 and the casing 4 to ensure a fluid-tight seal between the collar 7 and the casing 4.

Together with the head 6 the collar 7 defines a space 8 for receiving a predetermined quantity of salt 9.

The apparatus 1 further includes a transparent cylindrical receptacle 10 containing a predetermined quantity of soft water 11.

The receptacle 10 has a cross-section such as to accommodate the cartride 3 disposed vertically within it with the head end, to which the collar 7 is attached, uppermost and the base end bearing on the bottom 12 of the receptacle and in fluid communication therewith. The receptacle 10 has, to advantage, raised projections 13 on the bottom 12 for supporting the cartridge 3 above the bottom itself.

The receptacle 10 has substantially the same height as the total height of the cartridge 3 and the collar 7.

The receptacle 10 also contains a spherical body 14 which is visible from the exterior of the receptacle 10, and which has a density between that of soft water and that of a saline solution which is formed as described below.

The use of the apparatus 1 in regenerating an exhausted cartridge 3 taken from a cartridge water softener will now be described.

Firstly, the collar 7 is fitted to the cartridge 3, which is placed vertically, and a predetermined quantity of salt 9 is introduced into the space 8. The cartridge is then placed in the receptacle 10 which contains a predetermined quantity of soft, still water.

The water in the receptacle 10 rises within the cartridge 3, with a rising feed, by passing through the perforated base wall 5, until it again becomes still.

The quantity of soft water contained in the receptacle 10 is chosen so that when the cartridge 3 is resting firmly on the projections 13, it forms a free surface 15 of soft, still water with the resin 2 totally immersed in the water and consequently with immersion of at least part of the salt 9 in the space 8.

As a result of the contact which is established at the said free surface between the soft water and the salt 9 contained in the space 8, a saline solution forms continuously, the front of which propagates downwardly, gradually saturating the mass of soft still water enclosed in the cartridge, and progressing as the ion exchange reaction with the resin is completed.

The front of the saline solution, having passed through the entire cartridge, reaches the base wall 5 and passes into the receptacle 10. Here it encounters the spherical body 14, which, because of gravity is deposited on the bottom 12 of the receptacle 10, and thrusts it upwardly by fluid pressure. The rising of the spherical body 14 from the bottom 12 indicates the completion of the regeneration of the cartridge.

By repeated comparative tests carried out on cartridges regenerated by the traditional method and on cartridges regenerated by means of the apparatus according to the present invention, it is found that the quantity of water softened in the interval between two successive regenerations increases from 80 litres for the first tests to 180 litres for the second tests while the degree of hardness of the water leaving the cartridges which have just been regenerated decreases from 2° for the first tests to 1° for the second tests. The cartridges regenerated by means of the apparatus according to the invention give results which are practically identical to those of new cartridges.

The main advantage of the cartridge regeneration according to the present invention lies in the fact that the cartridges are given a longer working life between successive regenerations and a greater softening power.

Moreover, according to the invention, the regenerating operation is continued only for the time strictly necessary. Finally, the wastage of prime materials is avoided in that the water and salt are used only in the quantities strictly necessary for the regeneration.

## Claim

Apparatus for regenerating the resin content of the cartridge of a cartridge-type water softener, by continuously feeding a saline water solution through the cartridge to regenerate the resin, the cartridge being formed by a cylindrical casing with perforated transverse end walls, characterized in that it comprises a soft-water containing vertically extending cylindrical receptacle (10), a plurality of raised projections (13) on the inside surface of the closed bottom (12) of the receptacle (10), said projections (13) forming a seat for one perforated end wall (5) of the cartridge (3), when it is placed inside the receptacle (10), a collar (7) releasably attachable to the opposite perforated end wall (6) of the cartridge (3), coaxially thereto, said collar (7) being provided with means (7a) forming a fluid tight seal with the casing (4) of the cartridge (3) and defining a space (8) for receiving a predetermined quantity of salt (9), the receptacle (10) having a height substantially equal to the total axial height of the cartridge (3) and of the collar (7), and the quantity of soft-water contained into the receptacle (10) giving rise to a level (15) which is located below the free upper surface of the salt quantity which is formed in the space (8) at the beginning of the regenerating operation.

## Patentanspruch

Vorrichtung zum Regenerieren des Harzinhaltes der Patrone eines Patronen-Wasserenthärters, wobei zum Regenerieren des Harzes fortlaufend eine salzhältige Wasserlösung durch die Patrone geleitet wird und die Patrone durch ein zylindrisches Gehäuse mit gelochten querstehenden Entwänden gebildet wird, gekennzeichnet durch einen zylindrischen Behälters (10), der sich vertikal erstreckt und weiches Wasser enthält, eine Vielzahl von erhöhten Vorsprüngen (13), die sich auf der Innenfläche des geschlossenen Bodens (12) des Behälters (10) befinden, welche Vorsprünge eine Auflagefläche für eine perforierte Endwand (5) der Patrone (3) bilden, wenn sich die Patrone im Behälter befindet, ein Ringrohr (7), das entfernbar an der gegenüberliegenden Endwand (6) der Patrone (3) koaxial zur Patrone anbringbar ist, wobei das Ringrohr (7) eine Vorrichtung (7a) aufweist, die eine flüssigkeitsfeste Abdichtung mit dem Gehäuse (4) der Patrone (3) herstellt und das Ringrohr einen Freiraum (8) zur Aufnahme einer vorbestimmten Salzmenge (9) bestimmt, der Behälter (10) eine Höhe aufweist, die im wesentlichen gleich ist der Gesamtachshöhe der Patrone (3) und des Ringrohres (7) und die im Behälter (10) befindliche Menge von weichen Wasser einen Regel (15) bewirkt, der unterhalb der freien oberen Fläche der Salzmenge entsteht, welche bei Beginn des Regenerierungsvorgangs im Freiraum (8) gebildet wird.

## Revendication

Appareil pour régénérer la résine contenue dans la cartouche d'un adoucisseur d'eau du type à cartouche, en faisant passer continuellement une solution d'eau saline à travers la cartouche en vue de régénérer la résine, la cartouche étant formée par un étui cylindrique comportant des parois d'extrémité transversales perforées, caractérisé en ce qu'il comprend un récipient cylindrique vertical (10) contenant de l'eau douce, plusieurs saillies surélevées (13) sur la surface interne du fond imperforé (12) du récipient (10), les saillies (13) formant un siège pour une paroi d'extrémité perforée (5) de la cartouche (3) lorsqu'elle est placée à l'intérieur du récipient (10), un fût (7) pouvant être attaché de manière amovible à la paroi d'extrémité perforée opposée (6) de la cartouche (3), coaxialement à celle-ci, le fût (7) étant pourvu d'un moyen (7a) formant un joint étanche au fluide avec l'étui (4) de la cartouche (3) et définissant un espace (8) destiné à recevoir une quantité prédéterminée de sel (9), le récipient (10) ayant un poids en substance égal à la hauteur axiale totale de la cartouche (3) et du fût (7), et la quantité d'eau douce contenue dans le récipient (10) donnant un niveau (15) qui est situé en dessous de la surface supérieure libre de la quantité de sel qui est formée dans l'espace (8) au début de l'opération de régénération.